# EUROPEAN PATENT APPLICATION

(11) **EP 0 806 843 A2**
(43) Date of publication of application: **12.11.1997**
(21) Application number: 97303086.9
(22) Date of filing: 07.05.1997
(51) Int. Cl.: H04B 3/02

(54) **Contact apparatus for network**

(30) Priority: 07.05.1996 JP 112615/96
(71) Applicant: KABUSHIKI KAISHA TOSHIBA, Kawasaki-shi, Kanagawa-ken 210 (JP)
(72) Inventor: Jun, Okazaki, Yokohama-shi, Kanagawa-ken, 247 (JP); Takehiko, Okuyama, Yokohama-shi, Kanagawa-ken, 233 (JP); Yoshihisa, Sakazaki, Yokohama-shi, Kanagawa-ken, 244 (JP)
(74) Representative: Waldren, Robin Michael

(57) **Abstract**

A contact apparatus for a network in which a plurality of outlets are connected with each other by a repeater through a bus. A cable contains a bus to transmit signals and a power supply line. When the cable is connected with one of the outlets, the device concerned participates in the network and the power supply voltage is supplied to the device. Data can be exchanged between the devices only by connecting the cable with the outlets.

## Description

### Background of the Invention

### Field of the Invention:

The present invention relates to a contact apparatus for a network preferred to digital interface standards to be applied to the home electric apparatus.

### Related Art Statement:

In recent years, with the development of multimedia, the network system has been widely diffused. Various kinds of network environments have been developed for personal computers. At every home, people can enjoy multimedia services with audio and video apparatus (hereinafter called AV apparatus). For example, an interactive television receiver has already been developed as a television receiver for the next generation to achieve multimedia services, which is equipped with a CPU and its control software.

However, the above-mentioned AV apparatus do not correspond to the present network, so such apparatus cannot be connected with the present network bus. Therefore, unified standards for digital interface systems for data transmission and reception between a computer and a digital imaging apparatus has been under discussion. As a low cost peripheral interface suitable for multimedia services, the IEEE (The Institute of Electrical and Electronics Engineers, Inc.) 1394 interface is regarded as being very promising at present.

The multiple transmission of multimedia is possible through multiple channels by using the IEEE 1394 interface. The IEEE 1394 interface includes an isochronous transmission function which assures the transmission of video and audio data, or the like, within a specified time. Therefore, the IEEE 1394 interface is a digital interface suitable for image transmission.

At present, the standards for the IEEE 1394 interface is being revised and extended under the leadership of 1394 Trade Association (1394 TA). The IEEE 1394 interface is originally based on computer technology. However, because synchronous communication is possible through such an interface, AV apparatus manufacturers now participate in the preparation of the above-mentioned standards. The proposal of the Digital VCR Conference is now under discussion at the 1394 TA. The EIAR 4.1, or the like, for the purpose of discussing DVB (corresponding to European digital broadcasting) decoders and USA DTV (Digital TV) decoders has decided to adopt the IEEE 1394 as the interface standard for multimedia services.

Refer to "Comparison of Three New Interfaces Based on Design Concept for Post SCSI" (Literature 1) in Nikkei Electronics 1994. 7. 4 (No.612) pp. 152-163 for the IEEE 1394.

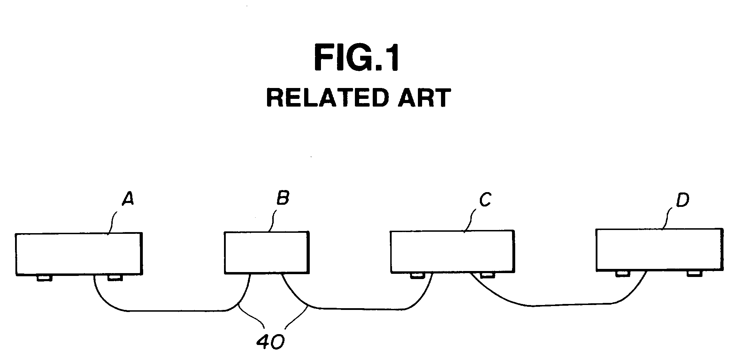

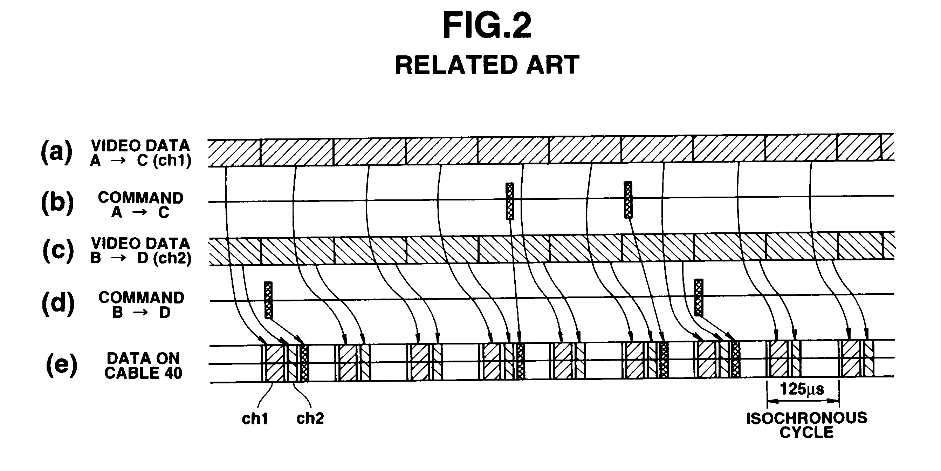

Figs. 1 and 2 are the diagrams for describing the interface system of the IEEE 1394 which can perform synchronous transmission and multiple transmission through a plurality of channels.

As described on page 162 and thereafter of the literature 1, multichannel transmission is possible by using the IEEE 1394. Fig. 2 shows an example of data transmission through two channels, namely, channels 1 and 2 (CH1 and CH2) by using a bus corresponding to the IEEE 1394 (hereinafter called IEEE 1394 bus). The IEEE 1394 can adopt daisy chain topology and tree topology. Fig. 1 shows an example of a plurality of devices A through D connected in the form of a daisy chain by means of the IEEE 1394 cable 40 as the IEEE 1394 bus. The devices A through D may be digital VCRs.

Fig. 2 shows an example of the data transmission from device A to device C ,and at the same time from device B to device D. For example, the output from the device A is dubbed at the device C, and at the same time the output from the device B is dubbed at the device D. In the IEEE 1394, data is transmitted at isochronous cycles of 125 µs.

Fig. 2(a) shows a video stream of the dubbing output from the device A. Such dubbing output is transmitted in each isochronous cycle. Fig. 2(c) shows a video stream of the dubbing output from the device B. This dubbing output is also transmitted in each isochronous cycle. A plurality of channels are assigned to each isochronous packet. The channel number is inserted in the packet from the devices A and B, which specifies a channel through which the dubbing output is transmitted. Fig. 2(e) shows the transmission of the output packet from the device A through channel 1 (CH1) and the transmission of the output packet from the device B through channel 2 (CH2).

The devices A and B output commands shown in Figs. 2(b) and (d) respectively through the IEEE 1394 cable. As shown in Fig. 2(e), these video streams and commands are multiplexed in each isochronous cycle and transmitted through the IEEE 1394 cable 40. As shown in Fig. 2(e), asynchronous data such as commands, or the like, is multiplexed at each gap between synchronous data (video data) and then transmitted.

The devices C and D determine the transmitted data to be received according to the channel number included in the packet transmitted through the IEEE 1394 cable 40 for its reception. That is, the device C receives the data transmitted through CH1 and the device D receives the data transmitted through CH2.

As described above, AV apparatus can be connected with each other through the network bus conforming to the IEEE 1394 standard. It is necessary for AV apparatus or the like not corresponding to the IEEE 1394 to connect its output devices with its respective input devices through cables. For example, to connect one output device with N input devices, the output device requires at least N cables for the video signal only. With the adoption of the IEEE 1394 digital interface, it is possible to connect the devices in a daisy chain form by installing 1 to 3 IEEE 1394 terminals on each device. As shown in Fig. 1, each device can be connected to up to two other devices through cables. Up to 63 devices can be connected by this daisy chain connection.

As described above, with the adoption of the IEEE 1394 digital interface, the complexity of the cable connection can be avoided. However, each device requires an AC power cable in addition to the IEEE 1394 cables, namely, three cables in total.

Generally speaking, since the AC wall outlets are installed at one or several places near the devices collectively, it is relatively easy to connect an AC cable with the AC outlet on the wall. However, the IEEE 1394 cable is usually installed on the rear of the devices, so in some cases they must be moved to connect them with each other. As described above, even devices conforming to the IEEE 1394 standards require many cables and their connection is relatively troublesome.

Such cable connection may be simplified by using a cable including the AC cable and the IEEE 1394 cables therein. However, if such a cable is used, only a 1:1 connection is possible.

Incidentally, in the case of IEEE1394, network settings are reset when the power is turned on. By such resetting, the connections between devices are confirmed, the master-slave relationship between the devices is set and each device ID is set again.

For the transmission of asynchronous data, such as computer data, such network resetting does not matter especially. However, it becomes a problem for the transmission of image data which must be isochronously transmitted. Since isochronous transmission is not assured by network resetting, the display of image data on a monitor may stop. In the case of VTR dubbing, it is necessary to control VTR recording intermittently. The recording by dubbing is actually impossible.

Thus, if power supply to even one device in a network is turned off, the network configuration changes and reconfiguration of the network takes place.

### Objects and Summary of the Invention:

An object of the present invention is to provide a contact apparatus for a network which simplifies the connection between a plurality of devices. Another object of the present invention is to provide a contact apparatus for a network which decreases the network reconfiguration frequency.

A contact apparatus for the network according to the present invention comprises a signal transmission line which corresponds to one or more circuits and transmits signals to a predetermined interface unit; a power supply line which supplies the power supply voltage to at least the above-mentioned predetermined interface unit; a plurality of outlets which are connected with a supply line of the power supply voltage and time connected with each other through a predetermined transmission line corresponding to the interface standards of the predetermined interface unit; a connecting part which can be connected with one of the plurality of outlets and can connect the signal transmission line and the power supply line with the predetermined transmission line and the supply line of the power supply voltage respectively through the one of the plurality of outlets.

Other features and advantages of the present invention will be apparent by reading the description given below.

### Brief Description of the Drawings:

Fig. 1 is a diagram for describing the IEEE 1394 interface system.

Fig. 2 is a diagram for describing the IEEE 1394 interface system.

Fig. 3 shows an embodiment of a contact apparatus for the network according to the present invention.

Fig. 4 is a diagram for describing a cable employed in an embodiment shown in Fig. 3.

Fig. 5 is a diagram for describing a receptacle employed in an embodiment shown in Fig. 3.

Fig. 6 is a diagram for describing a modified example of an embodiment shown in Fig. 3.

Fig. 7 is a diagram for describing another embodiment of the present invention.

Fig. 8 is a diagram for describing further another embodiment of the present invention.

Fig. 9 is a diagram for describing further another embodiment of the present invention.

### Detailed Description of the Preferred Embodiments

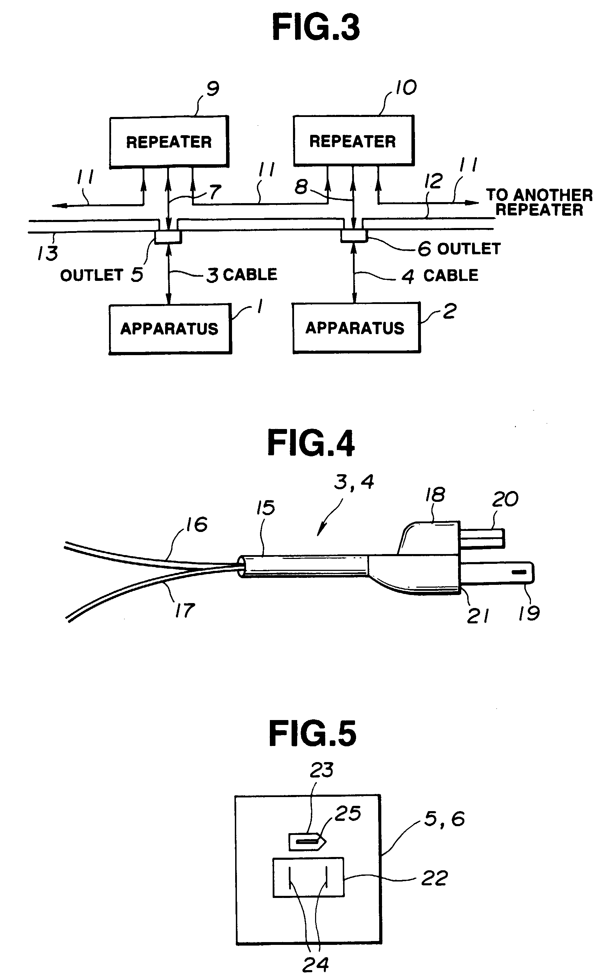

In Fig. 3, the devices 1 and 2 are AV apparatus which are equipped with a digital interface unit complying with the IEEE 1394 standard or the like. The digital interface units installed on the devices 1, 2 are respectively connected with cables 3, 4 including a bus such as the IEEE 1394 serial bus.

Fig. 4 shows a representation of the cables 3 and 4.

The cables 3 and 4 have the same configuration. That is, they have a bus 16 covered with shielding material 15 and a power supply line 17. Fig. 4 shows the cable with the shielding material 15 partially removed. A plug 18 is attached at the ends of the cables 3 and 4. The plug 18 has a male contact 19 which is connected with the power supply line 17 for AC power supply. In addition, the plug 18 has a male contact 20 at the end which is connected with the bus 16 for connection with the outlets 5 and 6 described later.

That is, one end of the bus 16 is connected with the digital interface units in the devices 1 and 2, and the other end of the bus 16 is connected with the male contact 20. The data can be transmitted through the cables 3 and 4 connected between the devices 1 and 2 and the outlets 5, 6. The power supply line 17 of the cables 3 and 4 can supply the devices 1 and 2 as well as the digital interface units installed on such devices or the like with the power supplied to the outlets 5, 6 respectively. Various input and output signals such as video, audio and control signals are transmitted through the bus 16.

The male contacts 19, 20 mounted at the end of the plug 18 are secured by a frame 21. By inserting the plug 18 in the outlets 5, 6, the bus 16 is electrically connected with the power supply line 17.

Fig. 5 is a diagram for describing the outlets 5, 6.

The outlets 5, 6 have the same configuration. They have an AC power supply receptacle 22 and a digital interface socket 23. The receptacle 22 has a female contact 24 for receiving the male contact 19, while the receptacle 23 has a female contact 25 for receiving the male contact 20. The outlets 5, 6 are installed, for example, on the wall 13. On the rear side of the wall 13, the power cable 12 which is electrically connected with the female contacts 24 of the outlets 5, 6 extends. The female contacts 25 of the outlets 5, 6 are electrically connected with repeaters 9, 10 installed on the rear side of the wall 13 through the buses 7, 8 respectively.

The repeaters 9, 10 are for the connection with the physical layer of a reference model for OSI (Open System Interconnection) (hereinafter called the OSI Reference Model). These repeaters have a transmission signal distribution function to distribute input data to one or more circuits.

For example, the repeater 9 is equipped with one port for connection with the bus 7 and two ports for connection with the bus 11. The repeater 9 transmits and receives data to and from the device 1 through the bus 7, outlet 5 and cable 3. In addition, the repeater 9 is connected with the repeater 10 through the bus 11, and at the same time connected with another repeater (not shown) through the bus 11, so as to transmit and receive the data to and from the repeater 10 and the other repeater. That is, the repeater 9 is recognized by other elements on the network, namely, other repeaters including the repeater 10 and all the devices connected with the network. And it functions to relay data on the bus 11 and at the same time has a function to transmit data for the device 1 on the bus 11 to the device 1.

The configuration of the repeater 10 is the same as that of the repeater 9. It is recognized by other elements on the network and functions to relay data on the bus 11 and at the same time has a function to send the data from the device 2 through the bus 11 and to transmit data for the device 2 on the bus 11 to the device 2.

In Fig. 3, the cable 3 connected with the device 1 is connected with the outlet 5, and the cable 4 connected with the device 2 is connected with the outlet 6. It will be apparent that the cables 3, 4 may be connected with any outlet.

In Fig. 3, two outlets 5, 6 are installed on the wall 13. According to network scale, as many outlets connected with each repeater as required may be installed on the wall.

The operation of the embodiment with such configuration is described below.

It is assumed that the devices 1, 2 are digital VCRs and they are not connected with the network. It is also assumed that the reproduced data from the device 1 is dubbed on the device 2. In this case, it is necessary for the user to connect the devices 1, 2 with the network. That is, it is necessary for the user to connect the plug 18 at the end of the cable 3 connected with the interface unit of the device 1 with the outlet 5 on the wall 13. Similarly, it is also necessary for the user to connect the plug 18 at the end of the cable 4 connected with the interface unit of the device 2 with the outlet 6 on the wall 13.

That is, the male contacts 19, 20 of the plug 18 are inserted in the female contacts 24, 25 of the receptacles 22, 23 respectively for connection. By so doing, the device 1 and its interface unit are connected with the power supply cable (not shown) through the power supply line 17 of the cable 3, the male contact 19 and the female contact 24 of the outlet 5. As a result, the power supply voltage is supplied to the interface unit. The power supply voltage is also supplied to the device 2 and its interface unit through the cable 4.

The interface unit of the device 1 is connected with the repeater 9 through the bus 16 of the cable 3, the male contact 20 and the female contact 25 of the outlet 5. Similarly, the interface unit of the device 2 is connected with the repeater 10 through the cable 4, the outlet 6 and the bus 8.

By so doing, the network is automatically configured and physical ID is set for the devices 1, 2 and the repeaters 9, 10. Therefore, the devices 1, 2 and the repeaters 9, 10 participate in the network, mutual connection is recognized and the data can be exchanged between the devices 1, 2.

The dubbing data from the device 1 is divided into packets by means of the interface unit. The resulting packet data is outputted through the bus 16 of the cable 3. The packet data is sent to the bus 7 through the outlet 5 and transmitted over the bus 11 through the repeater 9. The repeater 10 transmits data on the bus 11 to the device 2 through the bus 8, the outlet 6 and the bus 16 of the cable 4.

The interface unit of the device 2 reads the packet destination information from the data transmitted to the bus 16 and takes in a packet containing the destination information of its own. The interface unit divides the packet data into individual packets and the device 2 records the dubbing data in packet form.

The repeaters 9 and 10 send the packet data to other repeaters (not shown). Therefore, even when the device 1 sends data to a device other than the device 2, as far as such devices are connected with the outlet, the data is sent to the appropriate device through the cable, the outlet, the repeater and the like.

As described above, in the embodiment, not only a 1:1 connection but also the connection between a plurality of the devices becomes possible by installing a repeater. By installing an outlet which is always connected with the repeater when the power supply cable is connected, and by using the cable containing the bus and the power supply line therein to connect the devices with the outlet, the devices participate in the network and data can be exchanged between a plurality of devices. The cable contains the bus and the power supply line therein. Simply by inserting the plug at the end of the cable in the receptacle, the network can be configured.

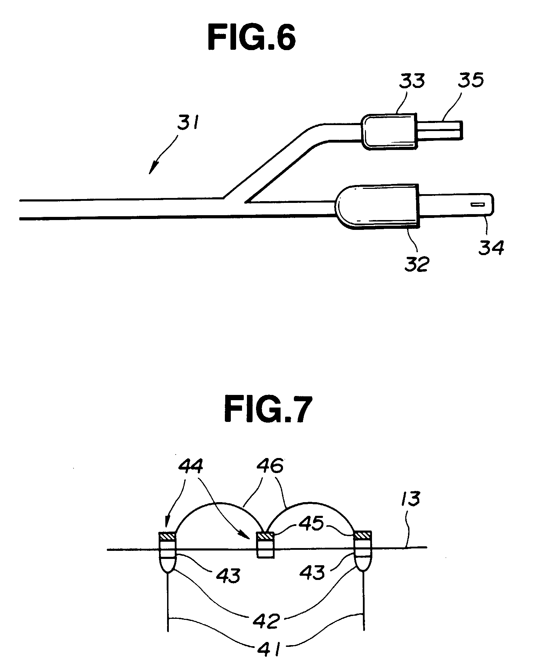

In Fig. 3, the power supply line 17 and the bus 16 are connected with the male contacts 19, 20 secured in a body by the frame 21 of the plug 18. In Fig. 6, the forked end of the cable 31 is equipped with the power supply line plug 32 and the bus plug 33. The plug 32 has the male contact 34 to be connected with the power supply line, and the plug 33 has the male contact 34 to be connected with the bus.

By using such cable 31, the flexibility of the outlet shape, etc., is improved. Other operations and effects are the same as those of the embodiment shown in Fig. 3.

Fig. 7 is a diagram for describing another embodiment of the present invention. In the case of this embodiment, the repeater(s) can be omitted.

In the case of the embodiment shown in Fig. 3, even though some of a plurality of receptacles are open without being connected with the devices, the receptacles are electrically connected with each other by the repeater(s). However, when the receptacles are connected with each other without using the repeater(s), the electrical connection between the receptacles are not assured. So the embodiment has been made in consideration of this case.

The interface unit of each device (not shown) is respectively connected with each cable 41. Each cable 41 contains the power supply line and the data transmission bus. The plug 42 is connected with the end of the cable 41. The configuration of the cables 41 and the plug 42 is the same as that of the cables 3, 4 and the plug 18 shown in Fig. 3.

On the front side of the wall 13, a plurality of receptacles 44 equipped with receptacles 43 in which the plug 42 is inserted are installed. The receptacle 43 has the same configuration as that of the receptacles 22, 23 shown in Fig. 5, for example. The receptacle 44 is embedded in the wall 13, which is connected with the power supply cable (not shown) on the rear side of such wall. Therefore, by inserting the plug 42 in the receptacle 43, the power supply voltage is applied to the devices (not shown) through the receptacle 43, the plug 42 and the cable 41.

In the embodiment, the receptacle 44 is equipped with a switch 45 which functions as a transmission assurance means on the rear side of the wall 13. The switch 45 is connected with the bus of the cable 41 through the receptacle 43. The switches 45 of the receptacles 44 are connected with each other through the bus 46.

When the plug 42 is not inserted in the receptacle 43, the switch 45 is on, so such a switch connects the cables with each other. Therefore, any receptacle in which the plug 42 is not inserted connects electrically two other receptacles that are connected with such a switch 45 through the cable 46. That is, the receptacle 44 for which the switch 45 is on can be regarded as not present, so it passes the data on the bus 46.

To the contrary, when the plug 42 is inserted in the receptacle 43, the switch 45 is off. In this case, the cable 42 is connected with the bus 46, and to the switch 45 of the adjacent receptacle 44. That is, the receptacle 44 for which the switch 45 is off can exchange data with another receptacle 44 connected with it through the bus 46.

For example, the switch 45 comprises each contact installed at each end of a pair of opposing movable members in the receptacle 43. When the plug 42 is inserted in the receptacle 43, the movable members separate so the contacts open. When the plug 42 is not inserted in the receptacle 43, the movable parts draw near with each other so the contacts close. Thus, by inserting and pulling out the plug 42 into and from the receptacle 43, the switch 45 may be turned on and off.

Next, the operation of such an embodiment will be described below.

It is assumed that the plug 42 is not inserted in the receptacle 43. It is also assumed that the device (not shown) is connected with the network for dubbing, for example. In this case, it is assumed that the plug 42 at the end of the cable 41 connected with the device on the reproduction side is inserted in the leftmost receptacle 44 in Fig. 7, and the plug 42 at the end of the cable 41 connected with the device on the reproduction side is inserted in the rightmost receptacle 44 in Fig. 7. It is also assumed that the plug 42 is not inserted in the middle receptacle 44 in Fig. 7.

The switches for the rightmost and the leftmost receptacles 44 in which the plug 42 is inserted in Fig. 7 are turned off. The switch 45 for the middle receptacle in which the plug 42 is not inserted in Fig. 7 is turned on. Therefore, the switches 45 for the rightmost and the leftmost receptacles 44 are connected with each other through the switch 45 for the middle receptacle 44 in Fig. 7 and the bus 46.

The dubbing data from the device on the reproduction side is sent to the cable 46 through the leftmost cable 41, the plug 42 and the switch 45 for the receptacle 44 in Fig. 7. Of the data on the cable 46, the dubbing data from the device on the reproduction side is sent to the device (not shown) on the recording side through the switch 45 for the rightmost receptacle 44, the plug 42 and the cable 41. Thus, dubbing is performed.

When the plug 42 of the cable 41 connected with the device (not shown) is connected with the middle receptacle 44 in Fig. 7, the switch 45 for the receptacle 44 is turned off. Therefore, it becomes possible to exchange data between the device connected with the middle receptacle 44 in Fig. 7 and the devices connected with the rightmost and the leftmost receptacles, and between the device connected with the leftmost receptacle and that connected with the rightmost receptacle.

As described above, this embodiment can obtain the same effects as those of the embodiment shown in Fig. 3 with the repeater omitted.

This embodiment can use a repeater(s), if so desired. It will be apparent that for example, this embodiment can be used together with the embodiment shown in Fig. 3. In addition, one receptacle can be connected with a plurality of receptacles by connecting the cable 41 containing a plurality of signal lines with a device equipped with input/output ports corresponding to the number of the signal lines.

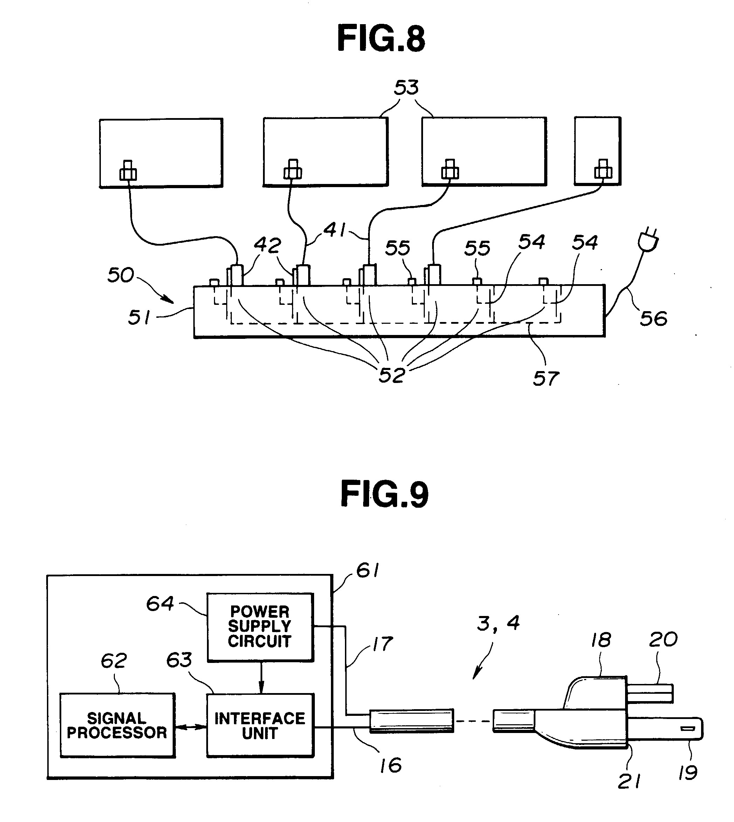

Fig. 8 is another embodiment according to the present invention. In Figs. 3, 7 and 8, the same components bear the same reference number with the omission of their description. In the case of this embodiment, the receptacles are not installed on the wall but on a table tap.

The table tap 50 comprises a casing 51 equipped with a plurality of receptacles in which the plug 42 is inserted. The receptacle 52 has a socket (not shown) in which the plug 42 is inserted. When the plug 42 is inserted in the socket, it is connected with the device 53 through the cable 41. In this embodiment, the connection between the receptacles 52 through the bus 57 is achieved or cut off by the switch 54.

The operating part 55 of the switch 54 protrudes from the casing 51. After depressing the operating part 55, the mutual connection between the receptacles 52 through the bus 57 can be turned on and off.

Each receptacle 52 is connected with the power supply cable 56. The power supply voltage supplied through the power supply cable 56 is fed to the device 53 through the cable 41 of the plug 42 inserted in the receptacle 52.

In this embodiment, the device 53 can participate in the network by inserting the plug 42 at the end of the cable 41 connected with the device 53 in one of the receptacles 52. The user can have the device 53 participate in the network by depressing the operating part 55 of the switch 54.

By so doing, data can be exchanged between the devices 53.

As described above, this embodiment can perform the same effects as those of the embodiments shown in Figs. 3 and 7.

In the above description, the casing 51 is equipped with the same receptacles, bus and switch as those shown in Fig. 7. However, it will be apparent that the casing 51 may have the same receptacles and repeaters as those of the embodiment shown in Fig. 3.

Fig. 9 shows another embodiment according to the present invention. In Figs. 4 and 9, the same components bear the same reference number with the omission of their description.

In each embodiment mentioned above, when any device is newly connected with the network by inserting the plug in the receptacle or when any device is disconnected from the network by pulling out the plug from the receptacle, the network is reconfigured. In addition, when the power switch of a predetermined device is turned off with such device is connected with the network, the network is reconfigured. In this embodiment, such reconfiguration can be avoided.

The device 61 is equipped with a predetermined signal processor 62 and the interface unit 63 as well as a power supply circuit 64. The signal processor 62 processes data exchanged with the predetermined interface unit 63 as specified. The interface unit 63 corresponds to the digital interface standards such as the IEEE 1394 standard, for example. It divides data from the signal processor 62 into packets and converts the resulting packets into the signal corresponding to the predetermined interface standard. Such a signal is sent out through the bus 16 in the cables 3, 4, and at the same time divides packet data received through the bus 16 into packets to send them to the signal processor 62.

In the embodiment, the power supply line 17 accommodated in the cables 3, 4 are connected with the power supply circuit in the device 61. The power supply circuit 64 can be always supplied with the power supply voltage through the power supply line 17. Therefore the interface unit 63 is always supplied with the power supply voltage regardless of the ON/OFF state of the power switch of the device 61.

In the embodiment, when the plug 18 of the cable 3, 4 is inserted in the receptacle, the power supply voltage is supplied to the power supply circuit 64. Under this condition, the power supply circuit 64 can supply the power supply voltage to the interface unit 63 to drive it. Therefore, the interface unit 63 is always driven, so it is connected with the network regardless of ON/OFF of the power switch of the device 61.

When the present invention is applied to the IEEE 1394 interface standards, the same functions as those of a repeater can be maintained and the reconfiguration of the network can be avoided by supplying the power to the physical layer of the OSI reference model.

As described above, even though the power switch of the device 61 is turned off, the reconfiguration of the network can be avoided. Therefore, it is possible to turn off the power to a predetermined device without adversely affecting other devices.

It will be apparent that various embodiments in a wide range can be achieved according to the present invention without departing from the spirit and the scope of the present invention. The present invention is limited only by the appended claims but not by any specific embodiment.

## Claims

1. A contact apparatus for a network, characterized by:
a signal transmission line which corresponds to one or more circuits and transmits a signal to a predetermined interface unit;
a power supply line which supplies the power supply voltage to at least said predetermined interface unit;
a plurality of outlets which are connected with a supply line of the power supply voltage and connected with each other through a predetermined transmission line corresponding to the interface standards of said predetermined interface unit; and
a connecting part which can be connected with one of said plurality of outlets and can connect said signal transmission line and said power supply line with said predetermined transmission line and said supply line of the power supply voltage respectively through one outlet of said plurality of outlets.

2. The contact apparatus for the network of claim 1, characterized in that said plurality of outlets are recognized by the device connected with said signal transmission line and said power supply line, and are connected with each other by a transmission signal distribution means which distributes signals transmitted through said predetermined transmission line to one or more circuits.

3. The contact apparatus for the network of claim 1, characterized in that said plurality of outlets are connected with each other by the connection of said connecting part, and when such connecting part is not connected, said outlets are connected by a plurality of transmission assurance means which pass signals transmitted through said transmission line.

4. The contact apparatus for the network of claim 1, characterized in that the power supply voltage is always supplied to said predetermined interface unit through said power supply line.

5. The contact apparatus for the network of claim 1, characterized in that a plurality of the receptacles above-mentioned, said predetermined transmission path and the supply line of said power supply voltage are accommodated in a casing.

6. A contact apparatus for the network, characterized by:
a cable containing a signal transmission line which corresponds to one or more circuits and transmits signals to said predetermined interface unit and a power supply line which supplies the power supply voltage to at least said predetermined interface unit;
a first and second contact parts at the end of said cable respectively connected with said signal transmission line and said power supply line;
a plurality of outlets having a third and fourth contact parts connectable with said first and second contact parts;
a supply line of the power supply voltage connected with said fourth contact parts of said plurality of outlets;
a plurality of transmission signal distribution means respectively connected with said third contact parts of said plurality of outlets; and
a transmission line which connects said plurality of transmission signal distribution means with each other.

7. The contact apparatus for the network of claim 6, characterized in that said first and second contact parts are formed in a body.

8. The contact apparatus for the network of claim 6, characterized in that said first and second contact parts are so formed that they have some degree of mutual freedom.

9. A contact apparatus for the network, characterized by:
a cable containing a signal transmission line which corresponds to one or more circuits and transmits signals to said predetermined interface unit and a power supply line for supplying the power supply voltage to at least said predetermined interface unit;
a first and second contact parts at the end of said cable connected with said signal transmission line and said power supply line;
a plurality of receptacles having a third and fourth contact parts connectable with said first and second contact parts;
a supply line of the power supply voltage connected with the fourth contact parts of a plurality of outlets;
a transmission line connected with said third contact parts of said plurality of outlets; and
a plurality of transmission assurance means which passes signals to be transmitted through said transmission path when said first contact parts are not connected with said third contact parts.

10. A contact apparatus for the network, characterized by:
a cable containing a signal transmission line which corresponds to one or more circuits and transmits signals to a predetermined interface unit and a power supply line which supplies the power supply voltage at least to said predetermined interface unit;
a first and second contact parts at the end of said cable connected with said signal transmission line and said power supply line respectively;
a plurality of outlets having a third and fourth contact parts connectable with said first and second contact parts;
a supply line of the power supply voltage connected with said fourth contact parts of said plurality of outlets;
a plurality of transmission signal distribution means respectively connected with said third contact parts of said plurality of outlets;
a transmission line which connects said plurality of transmission signal distribution means with each other; and
a casing accommodating said plurality of outlets, said supply line of the power supply voltage, said plurality of transmission signal distribution means and said transmission line.

11. A contact apparatus for the network, characterized by:
a cable containing a signal transmission line which corresponds to one or more circuits and transmits signals to a predetermined interface unit and a power supply line which supplies the power supply voltage to at least said predetermined interface unit;
a first and second contact parts at the end of said cable connected with said signal transmission line and said power supply line respectively;
a plurality of outlets having a third and fourth contact parts connectable with said first and second contact parts;
a transmission line connected with said third contact parts of said plurality of outlets;
a supply line of the power supply voltage connected with said fourth contact parts of said plurality of outlets;
a plurality of transmission assurance means which passes signals to be transmitted through said transmission line, when said first contact parts are not connected with said third contact parts; and
a casing accommodating said plurality of outlets, said supply line of the power supply voltage, said transmission line and said plurality of transmission signal distribution means.
